Europäisches Patentamt

European Patent Office

Office européen des brevets

(19)

(11) Publication number : **0 488 660 A1**

## (12) EUROPEAN PATENT APPLICATION

(21) Application number : **91310900.5**

(22) Date of filing : **27.11.91**

(51) Int. Cl.⁵ : **A01N 25/12, A01N 25/14, A01N 25/34**

(30) Priority : **29.11.90 JP 334265/90**

(43) Date of publication of application :
**03.06.92 Bulletin 92/23**

(84) Designated Contracting States :
**CH DE ES FR GB IT LI NL**

(71) Applicant : **SUMITOMO CHEMICAL COMPANY, LIMITED**
**5-33, Kitahama 4-chome Chuo-ku Osaka (JP)**

(72) Inventor : **Ogawa, Masao**
**11-8-303, Sonehigashinocho-2-chome**
**Toyonaka-shi (JP)**
Inventor : **Manabe, Yukio**
**11-8-102, Sonehigashinocho-2-chome**
**Toyonaka-shi (JP)**
Inventor : **Ohtsubo, Toshiro**
**20-10 Tomogaoka-2-chome**
**Sanda-shi (JP)**
Inventor : **Tsuda, Shigenori, Sanshiti**
**Katsurazaka Roiyaru**
**Ichibankan 509, 5-1, Oe**
**Kitakutsukakecho-1-chome**
**Nishikyo-ku, Kyoto-shi (JP)**

(74) Representative : **Coleiro, Raymond et al**
**MEWBURN ELLIS 2 Cursitor Street**
**London EC4A 1BQ (GB)**

(54) **Pesticidal composition.**

(57)    A pesticical composition having an excellent diffusing ability, comprising (a) a pesticidal active ingredient, (b) a surface active agent, (c) a carbonate, (d) a solid acid and (e) a silicone oil-type water repellent and/or a fluorine type water repellent, wherein at least one of the carbonate and the solid acid is water-soluble, the total content of the carbonate and the solid acid is in a proportion of 5 - 90% to the total weight, the weight ratio of the carbonate to the solid acid is in the range of 1 : 10 - 10 : 1, and the content of the silicone oil-type water repellent and/or the fluorine type water repellent is in a proportion of 0.01 - 10% to the total weight.

# F I G. I

EP 0 488 660 A1

The present invention relates to fizzy granules and fizzy tablets containing pesticides.

As the fizzy compositions, there have hitherto been known those described in, for example Japanese Patent Examined Publication Nos. 27930/1972 and 20128/1975.

Conventional fizzy compositions had, however, problems that they couldn't exhibit their effects sufficiently on applying them to an irrigated rice field, a pond, a moat, a river or the like because of their poor dispersibility in water or diffusing ability in water

In view of such circumstances, the present inventors have conducted earnest researches. As a result, the invention provides a useful fizzy composition comprising an active ingredient, a surface active agent, a carbonate, a solid acid and a water repellent and having an excellent diffusing ability.

In one aspect the present invention relates to a pesticidal composition (referred to hereinafter as the composition of the present invention) comprising a) a pesticidal active ingredient, b) a surface active agent, c) a carbonate, d) a solid acid and e) a silicone oil-type water repellent and/or a fluorine-type water repellent, wherein at least one of the carbonate and the solid acid is water-soluble, the total content of the carbonate and the solid acid is 5 - 90% to the total weight, the weight ratio of the carbonate to the solid acid is in the range of 1 : 10 - 10 : 1, and the content of the silicone oil-type water repellent and/or the fluorine-type water repellent is 0.01 - 10% to the total weight.

The pesticidal active ingredient used in the present invention is not limited specifically and includes the following compounds, active isomers thereof or mixtures thereof.

Compound No.                    Names of compounds

(1) α-cyano-3-phenoxybenzyl 2-(4-chlorophenyl)-3-methylbutyrate.

(2) (S)-α-cyano-3-phenoxybenzyl (S)-2-(4-chlorophenyl)-3-methylbutyrate,

(3) α-cyano-3-phenoxybenzyl 2,2,3,3-tetramethylcyclopropanecarboxylate,

(4) 3-phenoxybenzyl 3-(2,2-dichlorovinyl)-2,2-dimethylcyclopropanecarboxylate,

(5) 3-phenoxybenzyl chrysanthemate,

(6) 3-phenoxybenzyl (1R)-chrysanthemate,

(7) α-cyano-3-phenoxybenzyl 3-(2,2-dichlorovinyl)-2,2-dimethylcyclopropanecarboxylate,

(8) α-cyano-3-(4-bromophenoxy)benzyl 3-(2,2-dichlorovinyl)-2,2-dimethylcyclopropanecarboxylate,

(9) α-cyano-3-(4-fluorophenoxy)benzyl 3-(2,2-dichlorovinyl)-2,2-dimethylcyclopropanecarboxylate,

(10) α-cyano-3-(3-bromophenoxy)benzyl 3-(2,2-dichlorovinyl)-2,2-dimethylcyclopropanecarboxylate,

(11) α-cyano-3-(4-chlorophenoxy)benzyl 3-(2,2-dichlorovinyl)-2,2-dimethylcyclopropanecarboxylate,

(12) α-cyano-3-phenoxybenzyl chrysanthemate,

(13) α-cyano-3-phenoxybenzyl (1R)-chrysanthemate,

(14) α-cyano-3-(4-bromophenoxy)benzyl 2-(4-chlorophenyl)-3-methylbutyrate,

(15) α-cyano-3-(3-bromophenoxy)benzyl 2-(4-chlorophenyl)-3-methylbutyrate,

(16) α-cyano-3-(4-chlorophenoxy)benzyl 2-(4-chlorophenyl)-3-methylbutyrate,

(17) α-cyano-3-(4-fluorophenoxy)benzyl 2-(4-chlorophenyl)-3-methylbutyrate,

(18) α-cyano-3-phenoxybenzyl 2-(4-bromophenyl)-3-methylbutyrate,

(19) α-cyano-3-phenoxybenzyl 2-(4-tert-butylphenyl)-3-methylbutyrate,

(20) α-cyano-3-phenoxybenzyl 2-(3,4-methylenedioxyphenyl)-3-methylbutyrate,

(21) α-cyano-4-fluoro-3-phenoxybenzyl 3-(2,2-dichlorovinyl)-2,2- dimethylcyclopropanecarboxylate,

(22) α-cyano-3-phenoxybenzyl 2-(2-chloro-4-trifluoromethylanilino)-3-methylbutyrate,

(23) α-cyano-3-phenoxybenzyl 2-(4-difluoromethoxyphenyl)-3-methylbutyrate,

(24) α-cyano-3-phenoxybenzyl (S)-2-(4-difluoromethoxyphenyl)-3-methylbutyrate,

(25) α-cyano-(5-phenoxy-2-pyridyl)methyl 3-(2,2-dichlorovinyl)-2,2-dimethylcyclopropenecarboxylate,

(26) α-cyano-3-phenoxybenzyl 2,2-dimethyl-3-(1,2,2,2-tetrabromoethyl)cyclopropanecarboxylate,

(27) α-cyano-3-phenoxybenzyl 2,2-dimethyl-3-(1,2-dichloro-2,2-dibromoethyl)cyclopropanecarboxylate,

(28) α-cyano-3-phenoxybenzyl 1-(4-ethoxyphenyl)-2,2-dichlorocyclopropanecarboxylate,

(29) α-cyano-3-phenoxybenzyl 2,2-dimethyl-3-(2-chloro-2-trifluoromethylvinyl)cyclopropanecarboxylate,

(30) 2-(4-ethoxyphenyl)-2-methylpropyl 3-phenoxybenzyl ether,

(31) 2-(4-ethoxyphenyl)-3,3,3-trifluoropropyl 3-phenoxybenzyl ether,

(32) 2-methyl-3-phenylbenzyl (1R, trans)-2,2-dimethyl-3-(2-chloro-2-trifluoromethylvinyl)cyclopropanecarboxylate,

(33) 2,3,5,6-tetrafluoro-4-methylbenzyl (1R, trans)-2,2-dimethyl-3-(2-chloro-2-trifluoromethylvinyl)cyclopropanecarboxylate,

(34) 3,4,5,6-tetrahydrophthalimidomethyl chrysanthemate,

(35) 3,4,5,6-tetrahydrophthalimidomethyl (1R)-chrysanthemate,

(36) 3-allyl-2-methyl-4-oxocyclopent-2-enyl chrysanthemate,

(37) 3-allyl-2-methyl-4-oxocyclopent-2-enyl (1R)-chrysanthemate,

(38) (S)-2-methyl-4-oxo-3-(2-propynyl)cyclopent-2-enyl (1R)-chrysanthemate,

(39) 1-ethynyl-2-methyl-2-pentenyl (IR)-chrysanthemate,

(40) 5-benzyl-3-furylmethyl chrysanthemate,

(41) 5-benzyl-3-furylmethyl (1R)-chrysanthemate,

(42) α-cyano-3-(4-bromophenoxy)benzyl 3-(2,2-dibromovinyl)-2,2-dimethylcyclopropanecarboxylate,

(43) O,O-dimethyl O-(3-methyl-4-nitrophenyl) phosphorothioate,

(44) O,O-dimethyl S-[1,2-di(ethoxycarbonyl)ethyl] phosphorodithioate,

(45) O,O-dimethyl O-(4-cyanophenyl) phosphorothioate,

(46) O,O-dimethyl S-(α-ethoxycarbonylbenzyl) phosphorodithioate,

(47) O,O-diethyl O-(2-isopropyl-4-methyl-6-pyrimidinyl) phosphorothioate,

(48) O,O-dimethyl O-[3-methyl-4-(methylthio)phenyl] phosphorothioate,

(49) O-(4-bromo-2,5-dichlorophenyl) O,O-diethyl phosphorothioate,

(50) 2-methoxy-4H-1,3,2-benzoxaphosphorin-2-sulfide,

(51) O,O-dimethyl O-(2,4,5-trichlorophenyl) phosphorothioate,

(52) O,O-diethyl O-(3,5,6-trichloro-2-pyridyl) phosphorothioate,

(53) O,O-dimethyl O-(3,5,6-trichloro-2-pyridyl) phosphorothioate,

(54) O,O-dimethyl O-(4-bromo-2,5-dichlorophenyl) phosphorothioate,

(55) dimethyl 2,2-dichlorovinyl phosphate,

(56) O,S-dimethyl N-acetyl phosphoroamidothioate,

(57) O-(2,4-dichlorophenyl) O-ethyl S-propyl phosphorodithioate,

(58) O,O-dimethyl S-(5-methoxy-1,3,4-thiadiazolin-2-on-3-ylmethyl) phosphorodithioate,

(59) dimethyl 2,2,2-trichloro-1-hydroxyethylphosphonate,

(60) O-ethyl O-(4-nitrophenyl) benzenephosphonothioate,

(61) O,O-dimethyl S-(N-methylcarbamoylmethyl) phosphorodithioate,

(62) 2-sec-butylphenyl N-methylcarbamate,

(63) 3-methylphenyl N-methylcarbamate,

(64) 3,4-dimethylphenyl N-methylcarbamate,

(65) 2-isopropoxyphenyl N-methylcarbamate,

(66) 1-naphthyl N-methylcarbamate,

(67) 2-isopropylphenyl N-methylcarbamate,

(68) O,O-diethyl S-[2-(ethylthio)ethyl]phosphorodithioate,

(69) S-methyl N-[(methylcarbamoyl)oxy]thioacetoimidate,

(70) trans-5-(4-chlorophenyl)-N-cyclohexyl-4-methyl-2-oxothiazolidin-3-carboxamide,

(71) 2,3-dihydro-2,2-dimethyl-7-benzofuranyl N-dibutylaminothio-N-methylcarbamate,

(72) N,N-dimethyl-1,2,3-trithian-5-ylamine,

(73) 1,3-bis(carbamoylthio)-2-(N,N-dimethylamino)-propane hydrochloride,

(74) ethyl N-[2,3-dihydro-2,2-dimethylbenzofuran-7-yloxycarbonyl(methyl)aminothio]-N-isopropyl-β-alaninate,

(75) 1-[3,5-dichloro-4-(3-chloro-5-trifluoromethyl-2-pyridyloxy)phenyl]-3-(2,6-difluorobenzoyl)urea,

(76) 1-(3,5-dichloro-2,4-difluorophenyl)-3-(2,6-difluorobenzoyl)urea,

(77) 1-[3,5-dichloro-4-(1,1,2,2-tetrafluoroethoxy)-phenyl]-3-(2,6-difluorobenzoyl)urea,

(78) ethyl 2-(4-phenoxyphenoxy)ethylcarbamate,

(79) 2-tert-butyl-5-(4-tert-butylbenzylthio)-4-chloropyridazin-3(2H)-one,

(80) 1-[4-(2-chloro-4-trifluoromethylphenoxy)-2-fluorophenyl]-3-(2,6-difluorobenzoyl)urea,

(81) tert-butyl (E)-α-(1,3-dimethyl-5-phenoxypyrazol-4-ylmethylenaminoxy)-p-toluate,

(82) 3,7,9,13-tetramethyl-5,11-dioxa-2,8,14-trithia-4,7,9,12-tetraazapentadeca-3,12-diene-6,10-dione,

(83) 1-(6-chloro-3-pyridylmethyl)-N-nitroimidazolidin-2-ylidenamine,

(84) 5-ethoxy-3-trichloromethyl-1,2,4-thiadiazole,

(85) O,O-diisopropyl S-benzyl phosphorothiolate,

(86) O-ethyl S,S-diphenyl dithiophosphate,

(87) Polyoxin,

(88) Blasticidin S,

(89) 3,4-dichloropropionanilide,

(90) isopropyl N-(3-chlorophenyl)carbamate,

(91) S-ethyl N,N-dipropylthiolcarbamate,

(92) 3-methoxycarbonylaminophenyl N-(3-methylphenyl)carbamate,

(93) N-methoxymethyl-2-chloro-2′,6′-diethylacetanilide,

(94) 2,6-dinitro-N,N-dipropyl-4-trifluoromethylaniline,

(95) S-(4-chlorobenzyl) N,N-diethylthiolcarbamate,

(96) S-ethyl N,N-hexamethylenethiolcarbamate,

(97) N-(1,1,3-trimethyl-2-oxa-4-indanyl)-5-chloro-1,3-dimethylpyrazol-4-carboxamide,

(98) 3′-isopropoxy-2-(trifluoromethyl)benzanilide,

(99) diisopropyl 1,3-dithiolan-2-ylidenemalonate,

(100) 1,2,5,6-tetrahydropyrrolo[3,2,1-i,j]quinolin-4-one,

(101) 3-allyloxy-1,2-benzoisothiazole-1,1-dioxide,

(102) 5-methyl[1,2,4]triazolo[3,4-b]benzothiazole,

(103) 1,2-bis(3-methoxycarbonyl-2-thioureido)benzene,

(104) 1-(4-chlorobenzyl)-1-cyclopentyl-3-phenylurea,

(105) Validamycin A,

(106) 6-(3,5-dichloro-4-methylphenyl)-3(2H)-pyridazinone,

(107) Kasugamycin hydrochloride,

(108) methyl 1-(butylcarbamoyl)benzimidazole-2-carbamate,

(109) 3-(3,5-dichlorophenyl)-N-isopropyl-2,4-dioxoimidazolidine-1-carboxamide,

(110) 3-(3,5-dichlorophenyl)-5-methyl-5-vinyl-1,3-oxazolidine-2,4-dione,

(111) manganese ethylenebisdithiocarbamate,

(112) manganese and zinc ethylenebisdithiocarbamate,

(113) N-(trichloromethylthio)cyclohex-4-ene-1,2-dicarboximide,

(114) 3′-isopropoxy-2-methylbenzanilide,

(115) 3-hydroxy-5-methylisoxazole,

(116) tetrachloroisophthalonitrile,

(117) 1,1′-iminodi(octamethylene)diguanidine,

(118) 1-(4-chlorophenoxy)-3,3-dimethyl-1-(1H-1,2,4-triazol-1-yl)butanone,

(119) (E)-4-chloro-2-(trifluoromethyl)-N-[1-(imidazol-1-yl)-2-propoxyethylidene]aniline,

(120) methyl N-(methoxyacetyl)-N-(2,6-dimethylphenyl)alaninate,

(121) 3-chloro-N-(3-chloro-5-trifluoromethyl-2-pyridyl)-2,6-dinitro-4-methylaniline,

(122) N-butoxymethyl-2-chloro-2′,6′-diethylacetanilide,

(123) O-ethyl O-(5-methyl-2-nitrophenyl)-sec-butyl phosphoroamidothioate,

(124) ethyl N-chloroacetyl-N-(2,6-diethylphenyl)-glycinate,

(125) 2-[1-methyl-2-(4-phenoxyphenoxy)ethoxy]pyridine,

(126) (E)-1-(4-chlorophenyl)-4,4-dimethyl-2-(1H-1,2,4-triazol-1-yl)-1-penten-3-ol,

(127) 1-(4-chlorophenyl)-4,4-dimethyl-2-(1H-1,2,4-triazol-1-yl)-1-pentan-3-ol,

(128) 2-bromo-N-(α,α-dimethylbenzyl)-3,3-dimethylbutanamide.

(129) 1-(1-methyl-1-phenylethyl)-3-(p-tolyl)urea,

(130) 2-(2-naphthoxy)propionanilide,

(131) 2-(2,4-dichloro-3-methylphenoxy)propionanilide,

(132) 4-(2,4-dichlorobenzoyl)-1,3-dimethyl-5-pyrazolyl p-toluenesulfonate,

(133) 4-(2,4-dichlorobenzoyl)-1,3-dimethyl-5-phenacyloxypyrazole,

(134) 4-(2,4-dichloro-3-methylbenzoyl)-1,3-dimethyl-5-(4-methylphenacyloxy)pyrazole,

(135) 2,4.6-trichlorophenyl 4-nitrophenyl ether,

(136) 2,4-dichlorophenyl 3-methoxy-4-nitrophenyl ether,

(137) 2,4-dichlorophenyl 3-methoxycarbonyl-4-nitrophenyl ether,

(138) 2-benzothiazol-2-yloxy-N-methylacetanilide,

(139) 2′,3′-dichloro-4-ethoxymethoxybenzanilide,

(140) 5-tert-butyl-3-(2,4-dichloro-5-isopropoxyphenyl)-1,3,4-oxadiazol-2-(3H)-one,

(141) 2-amino-3-chloro-1,4-naphthoquinone,

(142) methyl 2-[3-(4,6-dimethoxypyrimidin-2-yl)ureidosulfonylmethyl]benzoate,

(143) 3,7-dichloroquinoline-8-carboxylic acid,

(144) ethyl 5-[3-(4,6-dimethoxypyrimidin-2-yl)ureidosulfonyl]-1-methylpyrazole-4-carboxylate,

(145) 3-chloro-2-[4-chloro-2-fluoro-5-(2-propynyloxy)phenyl]-4,5,6,7-tetrahydro-2H-indazole,

(146) O-(4-tert-butylphenyl) N-(6-methoxy-2-pyridyl)-N-methylthionocarbamate,

(147) O-(3-tert-butylphenyl) N-(6-methoxy-2-pyridyl)-N-methylthionocarbamate,

(148) O-(4-chloro-3-ethylphenyl) N-(6-methoxy-2-pyridyl)-N-methylthionocarbamate,

(149) O-(4-bromo-3-ethylphenyl) N-(6-methoxy-2-pyridyl)-N-methylthionocarbamate,

(150) O-(3-tert-butyl-4-chlorophenyl) N-(6-methoxy-2-pyridyl)-N-methylthionocarbamate,

(151) O-(4-trifluoromethylphenyl) N-(6-methoxy-2-pyridyl)-N-methylthionocarbamate,

(152) 1-(2-chlorobenzyl)-3-(α,α-dimethylbenzyl)urea,

(153) N-(3,5-dichlorophenyl)-1,2-dimethylcyclopropane1,2-dicarboximide,

(154) O-(2,6-dichloro-4-methoxyphenyl) O,O-dimethyl phosphorothioate,

(155) 1-ethyl-1,4-dihydro-6,7-methylenedioxy-4-oxo-3-quinolinecarboxylic acid,

(156) (E)-1-(2,4-dichlorophenyl)-4,4-dimethyl-2-(1H-1,2,4-triazol-1-yl)-1-penten-3-ol,

(157) isopropyl 3,4-diethoxyphenylcarbamate,

(158) N-[4-chloro-2-fluoro-5-(1-methyl-2-propionyloxy)-phenyl]-3,4,5,6-tetrahydrophthalimide,

(159) N-[4-chloro-2-fluoro-5-(pentyloxycarbonylmethoxy)phenyl]-3,4,5,6-tetrahydrophthalimide,

(160) 7-fluoro-6-(3,4,5,6-tetrahydrophthalimido)-4-(2-propynyl)-3,4-dihydro-1,4-benzoxazin-3(2H)-one,

(161) 2-[1-(ethoxyimino)ethyl]-3-hydroxy-5-[2-[4-(trifluoromethyl)phenylthio]ethyl]-2-cyclohexen-1-one,

(162) 1-(4-chlorophenyl)-3-(2,6-difluorobenzoyl)urea,

(163) isopropyl (2E,4E)-11-methoxy-3,7,11-trimethyl-2,4-dodecadienoate.

(164) 2-tert-butylimino-3-isopropyl-5-phenyl-3,4,5,6-tetrahydro-2H-1,3,5-thiadiazin-4-one,

(165) 2-phenoxy-6-(neopentyloxymethyl)pyridine,

(166) 3-chloro-2-[7-fluoro-4-(2-propynyl)-3,4-dihydro-1,4-benzoxazin-3(2H)-on-6-yl]-4,5,6,7-tetrahydro-2H-indazole,

(167) 4'-chloro-2'-(α-hydroxybenzyl)isonicotinanilide,

(168) 6-(benzylamino)purine,

(169) 5-chloro-3-methyl-4-nitro-1H-pyrazole,

(170) 2-chloroethyltrimethylammonium chloride,

(171) 2-(3-chlorophenoxy)propionic acid,

(172) 3-(4-chlorophenyl)-1,1-dimethylurea,

(173) 2,4-dichlorophenoxyacetic acid,

(174) 3-(3,4-dichlorophenyl)-1,1-dimethylurea,

(175) 1,1'-ethylene-2,2'-bipyridinium dibromide,

(176) maleic hydrazide,

(177) 2,4-dinitro-6-sec-butylphenol,

(178) 2,4-dimethyl-5-(trifluoromethylsulfonylamino)acetanilide,

(179) 6-(furfurylamino)purine,

(180) β-hydroxyethylhydrazine,

(181) 3-indoleacetic acid,

(182) 3-methyl-5-(1-hydroxy-4-oxo-2,6,6-trimethyl-2-cyclohexen-1-yl) cis, trans-2,4-pentadienic acid,

(183) 1-naphthoxyacetic acid,

(184) 7-oxabicyclo[2.2.1]heptane-2,3-dicarboxylic acid monoalkylamine salt,

(185) 1-phenyl-3-[4-(2-chloropyridyl)]urea,

(186) sodium 5-chloro-1H-indazol-3-ylacetate,

(187) S,S-dimethyl 2-(difluoromethyl)-4-(2-methylpropyl)-6-(trifluoromethyl)pyridine-3,5-dicarbothioate,

(188) 3-(4,6-dimethoxy-1,3,5-triazin-2-yl)-1-[2-(2-methoxyethoxy)phenylsulfonyl]urea.

(189) exo-1-methyl-4-(1-methylethyl)-2-(2-methylphenylmethoxy)-7-oxabicyclo[2.2.1]heptane,

(190) 2',6'-diethyl-N-[(2-cis-butenoxy)methyl]-2-chloroacetanilide.

(191) 2,3-dihydro-3,3-dimethyl-5-benzofuranyl ethanesulfonate,

(192) 2',6'-dimethyl-N-(3-methoxy-2-thenyl)-2-chloroacetanilide,

(193) 1-(2-chloroimidazo[1,2-a]pyridin-3-ylsulfonyl)-3-(4,6-dimethoxy-2-pyrimidinyl)urea,

(194) 3-isopropyl-1H-2,1,3-benzothiadiazin-4(3H)-one-2,2-dioxide,

(195) 2-(1-ethoxyiminobutyl)-5-[2-(ethylthio)propyl]-3-hydroxycyclohex-2-en-1-one,

(196) 2',6'-diethyl-N-(2-propoxyethyl)-2-chloroacetanilide,

(197) 1,1'-dimethyl-4,4'-bipyridinium dichloride,

(198) S-(1-methyl-1-phenylethyl) piperidine-1-carbothioate,

(199) S-(2-methyl-1-piperidinecarbonylmethyl) O,O-dipropyl dithiophosphate,

(200) S-benzyl N-ethyl-N-(1,2-dimethylpropyl)thiolcarbamate.

(201) 2-chloro-4-ethylamino-6-isopropylamino-1,3,5-triazine,

(202) 2-methylthio-4,6-bis(ethylamino)1,3,5-triazine,

(203) ammonium homoalanin-4-yl(methyl)phosphinate,

(204) 2-chloro-4,6-bis(ethylamino)-1,3,5-triazine,

(205) sodium L-2-amino-4-[(hydroxy)(methyl)phosphinoyl]butyryl-L-alanyl-L-alaninate,

(206) isopropylammonium N-(phosphonomethyl)glycinate,

(207) trimethylsulfonium N-(phosphonomethyl)glycinate,

(208) 2-methylthio-4-ethylamino-6-(1,2-dimethylpropylamino)-1,3,5-triazine,

(209) succinic 2,2-dimethylhydrazide, and

(210) 3-[2-(3,5-dimethyl-2-oxocyclohexyl)-2-hydroxymethyl]glutarimide.

In the composition of the present invention, the pesticidal active ingredients may be used alone or in admixture of the two or more of them. If they are used in combination, the mixing ratio may be optionally chosen.

Among these compounds, those having a solubility in water at 20°C in the range of 1 ppm or more is more preferable.

If the active ingredient in the composition of the present invention has a melting point of less than 70°C, addition of a calcined product of a precipitated hydrated silicone dioxide or a dry-processed silica is preferred. That is, in addition to the active ingredient, the surface active agent, the carbonate, the solid acid and the water repellent which are essential for the present invention, a water-soluble carrier, a water-soluble polymer, a mineral carrier, a solvent, a desiccant, a lubricant or a disintegrating agent can be admixed according to necessity.

The contents of these active ingredients vary depending on the kinds of the ingredients and are generally in the range of 0.01 - 80% by weight, preferably 0.1 - 50% by weight to the total weight of the composition of the present invention. In addition, when these active ingredients are liquids or are employed in the form of a solution in a solvent, the content of the ingredient should be usually in the range of 0.01 - 60% by weight, preferably 0.1 - 40% by weight. The amount added of the calcined product of the precipitated hydrated silicone dioxide or the dry-processed silica which is used as an absorbant of a liquid active ingredient and/or a solvent is usually in the range of 50 - 200% by weight, preferably 60 - 100% by weight to the total liquid ingredients. For example, synthetic hydrated silicone dioxide (silica produced by the wet process) such as Tokusil[Trade Mark] GU-N, Tokusil N, Tokusil U, Tokusil GU (manufactured by Tokuyama Soda Co., Ltd.), Karplex #80[Trade Mark] (manufactured by Shionogi & Co., Ltd.), Carplex # 67, Carplex # 1120, Carplex # 100, Carplex 22S, Carplex FPS-1, Carplex FPS-2, Carplex FPS-3, Carplex FPS-4, Nipsil[Trade Mark] (manufactured by Nippon Silica) or Ultrasil[Trade Mark] (manufactured by Degussa) calcined at a temperature of 700 - 900°C, preferably 800 - 900°C are used as a calcined product of a silica produced by the wet process. Commercially available products such as Carplex CS-5, Carplex CS-7 or Finesil P-8 (manufactured by Tokuyama Soda Co., Ltd.) may be used as such.

On the other hand, as the dry-processed silica, there is employed a light silicic anhydride such as AEROSIL[Trade Mark] 200 or AEROSIL 300 (manufactured by Degussa).

When the active ingredient has a melting point in the range of 0 - 70°C, a solvent is added, if necessary, in order to decrease the viscosity of the ingredient at its production and to prevent the crystallization of the active ingredient under storage at a low temperature. As the solvent, there is usually used a non-volatile or sparingly volatile organic solvent which is mixed homogeneously with the active ingredient. The organic solvents include, for example, aromatic hydrocarbons such as phenylxylylethane, ketones, vegetable oils, mineral oils, liquid paraffin, polyethylene glycol having an average molecular weight in the range of about 200 - 600 which is liquid at room temperature, polypropylene glycol, and glycol ethers such as polypropylene glycol methyl ether and acetate thereof, particularly preferably phenylxylylethane, the glycol ethers and the acetates of the glycol ethers are preferred. The added amount of the solvent is usually 10 - 1000% by weight, preferably 30 - 200% by weight to the amount of the active ingredient. The aforementioned solvent may be added, if necessary, for lowering the viscosity at production, even if the active ingredient has a melting point of 0°C or less.

As the surface active agents used in the present invention, there are used those which emulsify and disperse the active ingredient, the calcined product of the silica produced by the wet process or the like. For example, there can be mentioned anionic surface active agents such as alkyl aryl sulfonates, alkyl naphthalene sulfonates, lignin sulfonates, dialkyl sulfosuccinates, polyoxyethylene alkyl aryl ether sulfates, alkali metal salts of copolymers having carboxyl groups or fatty acid salts, and nonionic surface active agents such as polyoxyethylene alkyl ethers, polyoxyethylene alkyl phenyl ethers, polyoxyethylene styryl phenyl ethers, polyoxyethylene alkyl esters, sorbitan alkyl esters or polyoxyethylene sorbitan alkyl esters. Also, there may be used cationic surface active agents, or amphoteric surface active agents according to necessity. These surface active agents are used alone or in combination. The used amount of the surface active agent is usually 0.1 - 70% by weight, preferably 1 - 40% by weight, more preferably 3 - 20% by weight to the total weight of the composition of the present invention.

As the carbonate used in the composition of the present invention, there are mentioned for example sodium carbonate, potassium carbonate, lithium carbonate, ammonium carbonate, calcium carbonate, sodium bicarbonate, potassium bicarbonate, lithium bicarbonate, ammonium bicarbonate, sodium sesquicarbonate, potassium sesquicarbonate, or ammonium sesquicarbonate. Sodium bicarbonate or sodium carbonate is particularly preferred. The aforementioned carbonates may be used alone or in combination.

As the solid acid used in the composition of the present invention, there are mentioned for example citric acid, succinic acid, maleic acid, fumaric acid, tartaric acid, oxalic acid, malonic acid, malic acid, adipic acid, boric acid, sodium dihydrogen phosphate, potassium dihydrogen phosphate, benzoic acid, sulfamic acid, salicylic acid, ascorbic acid, glutamic acid, aspartic acid, sorbic acid, nicotinic acid or phenylacetic acid. Particularly, maleic acid, fumaric acid, citric acid, succinic acid, boric acid, malic acid and tartaric acid are preferred.

These acids may be used alone or in combination.

The carbonate and the solid acid are used in such amounts that the total amount of them is usually in a proportion of 5-90% by weight, preferably 10-70% by weight, more preferably 20-60% by weight to the total weight of the composition of the present invention. The weight ratio of the carbonate to the solid acid is usually in a range of 1 : 10 - 10 : 1, preferably 1 : 5 - 5 : 1, more preferably 1 : 3 - 3 : 1.

Furthermore, as the silicone oil-type water repellent used in the composition of the present invention, there can be mentioned, for example, a silicone oil, a methylstyrene modified silicone oil, an olefin modified silicone oil, a polyether modified silicone oil, an alcohol modified silicone oil, a fluorine modified silicone oil, a mercapto-modified silicone oil, an epoxy-modified silicone oil or a higher fatty acid modified silicone oil, preferably a silicone oil. As the silicone oil, a silicone oil having a viscosity in the range of 1 - 3000 cps at 25°C is preferred in consideration of its handling. As the fluorine-type water repellent used in the composition of the present invention, there are mentioned, for example, a copolymer of perfluoroalkyl acrylic acid-methyl methacrylate, a copolymer of alkyl methacrylateperfluoroalkylmethacrylate, a fluoroalkylcarboxylic acid or a perfluoroalkylcarboxylic acid. The solid fluorine-type water repellent is usually used in the form of a solution in a volatile organic solvent such as an aromatic hydrocarbon, perchloroethylene or 1,1,1-trichloroethane. TEXGUARD TG-620 (manufactured by DAIKIN KOGYO K.K.), or ELASGUARD 300 (manufactured by DAIICHI KOGYO SEIYAKU) may also be used. When the volatile organic solvent is used, it is evaporated after mixing the whole ingredients of the composition of the present invention.

These water repellents are used alone or in combination. The amount of the water repellent is usually 0.01 - 10% by weight, preferably 0.1 - 5% by weight to the total weight of the composition of the present invention.

The composition of the present invention may contain a desiccant such as calcium oxide, boron oxide ($B_2O_3$), aluminium oxide, barium oxide, magnesium oxide, metaboric acid, or sodium aluminate. The added amount of the desiccant is usually 0.5 - 40% by weight, preferably 1 - 10% by weight to the total weight of the composition of the present invention.

Also, in the composition of the present invention there may be contained a water-soluble carrier, a water-soluble polymer, a mineral carrier, a lubricant or a disintegrating agent. As the water-soluble carrier, there are mentioned urea, lactose, ammonium sulfate, sugar, sodium chloride or sodium sulfate.

As the water-soluble polymer, there are mentioned hydroxypropyl cellulose, methyl cellulose, methylethyl cellulose, polyvinyl alcohol, polyvinyl pyrrolidone, hydroxypropylmethyl cellulose, sodium carboxymethyl cellulose or polyethylene glycols having an average molecular weight of 6000 - 20000.

As the mineral carrier, there are mentioned kaolin clay, diatomite, acid clay, talc or attapulgite clay.

Moreover, the lubricant includes magnesium stearate, or titanium oxide, and the disintegrating agent includes microcrystalline cellulose.

When these water-soluble carrier, water-soluble polymer, mineral carrier, lubricant and disintegrating agent are added, the amounts added are usually 0.1 - 50% by weight, preferably 0.5 - 20% by weight to the total weight of the composition of the present invention.

Furthermore, it is also possible to add appropriately a stabilizer, an enhancer, a colorant, a perfume, or a builder to the composition of the present invention.

The composition according to the present invention, of which active ingredient has a melting point of 70°C or more, can be produced by pulverizing the active ingredient alone or mixture thereof with either one or all of the surface active agent, the carbonate and the solid acid with a dry pulverizer such as air mill, pinmill or hammer mill, and then mixing them with the residual ingredients. When the active ingredient is liquid or in the form of liquid by the addition of a solvent, the composition may be produced in the same manner as above after the active ingredient is absorbed into the calcined product of a silica produced by the wet process or the silica produced by the dry process.

The powderous composition of the present invention thus obtained can be used as such, but it is desirable to use it in the form of granule or tablet from its handling, safety or environmental view point. In this connection, the granule means the granulated product of the powderous composition of the present invention, of which shape varies depending on granulation methods and is in a wide range of cylindricals, sphericals or irregulars. Also, the tablet means a product of the powderous or granular composition of the present invention compressed into a certain shape, which is in a variety from the ones having sharp edges or rounded edges to the one of a lens having shallow curvature, such as a pillow shape, an almond shape, a finger shape, triangle, square, pentagon or a capsule shape.

The granule can be prepared by forming the powderous composition of the present invention into a granulated product in the form of sheet or pillow or slugs with a dry granulating machine such as a roll compactor or a briquetting machine or with a slug machine, respectively, and disintegrating or breaking the granulated product or slugs with a screening apparatus. In this connection, the granule is preferably subjected to sphering treatment with a Marumerizer (manufactured by Fuji Paudal Co., Ltd.) or the like in order to prevent dusting on its transport or use. If the compacting machine is used, the powderous composition is placed between rotary rolls and is pressed at 30 kg/cm² or more, preferably 50 kg/cm² or more. This method uses no water, and carbon dioxide gas is not generated during the production process, so that when the granule is applied to a paddy field, a pond, a river or the like or diluted with water, effevescence is observed more sufficiently. The aforementioned granule has usually a particle diameter in the range of about 10000 - 100 μm, preferably about 4000 - 297 μm.

The tablet is prepared by tableting a certain amount of the powderous composition of the present invention by hand press. In an industrial scale, tablets having a certain weight can be continuously prepared by tableting the aforementioned powder or granule in a tableting machine or a briquetting machine. The tablet may be in the sizes suitable for its applications and usually has a diameter in the range of about 7 - 100 mm, a thickness in the range of about 1 - 40 mm and a weight per tablet in the range of about 0.1 - 100 g, preferably about 1 - 50 g.

The composition of the present invention is directly applied to an irrigated rice field, a river, a pond, a moat or the like.

When the composition of the present invention is applied to an irrigated rice field, the applied amount thereof varies depending on the kinds or amounts of the active ingredients and is usually in the range of about 50 - 2000 g, preferably about 500 - 1000 g per 10 are.

When the composition of the present invention is applied directly, no special devices are generally required. For instance, an operator gets into a paddy field and applies the composition of the present invention uniformly or to one or more places of the paddy field, or he applies the composition to the sides of the footpath of the paddy field or to the water inlet of the paddy field or distributes the composition from the footpath without getting into the paddy field, so that the active ingredient can be distributed and diffused to all places of the paddy field. Also, the composition can be applied by motorized granular application at a footpath or dispersed into air with a helicopter, an airplane or a radio-controlled airplane.

When the composition of the present invention is applied to an irrigated rice field, a pond, a moat, a river or the like, the active ingredient is rapidly and uniformly diffused into water by the generation of carbon dioxide. Thus the pesticidal ingredient (against harmful insects, harmful microorganisms, weeds and the like) or the plant growth regulating active ingredient exhibits sufficient effects on pests or crops, respectively, and is diffused uniformly, so that the composition of the present invention is also a composition excellent in the point of reducing the phytotoxicity of pesticides. Also, when the composition of the present invention is applied to a paddy field, the applied amount thereof can be reduced extensively as compared with the conventionally applied amount (e.g. 3000 - 4000 g per 10 are in the case of particles), so that the composition is also useful in the points of the transport, storage and labor-saving dispersion of the product.

The present invention is further explained in detail with reference to preparation examples, comparative examples and test examples, but it is not limited thereto. In addition, parts in the preparation examples and the comparative examples indicate parts by weight.

First of all, preparation examples are described.

Preparation Example 1

4.5 parts of the compound (97), 13.5 parts of REAX 85A (sodium lignin sulfonate, manufactured by Westvaco), 1.5 parts of REAX 88B (sodium lignin-sulfonate, manufactured by Westvaco), 5 parts of GEROPON SC-211 (potassium salt of a copolymer having carboxyl groups, manufactured by Rhone Poulenc), 30 parts of sodium carbonate, 30 parts of maleic acid, 14.5 parts of lactose and 1 part of Silicone Oil KF-96 (manufactured by Shinetsu Kagaku Kogyo, viscosity: 100 cps at 25°C) were mixed well in a juice mixer and then pulverized in a centrifugal pulverizer. The mixture was next granulated into a granular sheet by applying a pressure of 50 kg/cm² with a roll compactor, TF-MINI model (manufactured by FREUND SANGYO) and then broken with a mortar and a pestle and passed through a screen to give granules having a particle diameter of 1680 - 710 μm.

Preparation Example 2

The granule having a particle diameter in the range of 3360 - 1680 μm was prepared by the same operation of the same composition as Preparation Example 1.

Preparation Example 3

The same procedure as in Preparation Example 1 was repeated with 4.5 parts of the compound (97), 13.5 parts of REAX 85A, 1.5 parts of REAX 88B, 5 parts of GEROPON SC-211, 30 parts of sodium carbonate, 30 parts of maleic acid, 14.5 parts of lactose and 1 part of Silicone Oil KF-96 (manufactured by Shinetsu Kagaku Kogyo, viscosity: 500 cps at 25°C) to give granules having a diameter of 1680-710 μm.

Preparation Example 4

The same procedure as in Preparation Example 1 was repeated with 4.5 parts of the compound (97), 13.5 parts of REAX 85A, 1.5 parts of REAX 88B, 5 parts of GEROPON SC-211, 30 parts of sodium carbonate, 30 parts of maleic acid, 14.5 parts of lactose and 1 part of Silicone Oil KF-96 (manufactured by Shinetsu Kagaku Kogyo, viscosity: 1000 cps at 25°C) to give granules having a diameter of 1680-710 μm.

Preparation Example 5

The same procedure as in Preparation Example 1 was repeated with 4.5 parts of the compound (97), 13.5 parts of REAX 85A, 1.5 parts of REAX 88B, 5 parts of GEROPON SC-211, 30 parts of sodium carbonate, 30 parts of maleic acid, 12.5 parts of lactose and 3 part of Silicone Oil KF-96 (manufactured by Shinetsu Kagaku Kogyo, viscosity: 500 cps at 25°C) to give granules having a diameter of 1680-710 μm.

Preparation Example 6

The same procedure as in Preparation Example 1 was repeated with 4.5 parts of the compound (97), 13.5 parts of REAX 85A, 1.5 parts of REAX 88B, 5 parts of GEROPON SC-211, 30 parts of sodium carbonate, 30 parts of maleic acid, 9.5 parts of kaolin clay, 5 parts of boron oxide and 1 part of Silicone Oil KF-96 (manufactured by Shinetsu Kagaku Kogyo, viscosity: 500 cps at 25°C) to give granules having a diameter of 1680-710 μm.

Preparation Example 7

In a tableting machine having a diameter of 30 mmϕ, 5.0 g of a powder which had been subjected to centrifugal pulverization in Preparation Example 1 was placed and pressed at a pressure of 400 kg/cm² to give tablets.

Preparation Example 8

The same procedure as in Preparation Example 1 was repeated with 20 parts of the compound (128), 9 parts of REAX 85A, 1 part of REAX 88B, 5 parts of GEROPON SC-211, 30 parts of sodium carbonate, 30 parts of maleic acid, 4.9 parts of lactose and 0.1 part of Silicone Oil KF-96 (manufactured by Shinetsu Kagaku Kogyo, viscosity: 100 cps at 25°C) to give granules having a diameter of 1000-297 μm.

Preparation Example 9

The same procedure as in Preparation Example 1 was repeated with 20 parts of the compound (128), 9 parts of REAX 85A, 1 part of REAX 88B, 5 parts of GEROPON SC-211, 30 parts of sodium carbonate, 30 parts of maleic acid, 4.7 parts of lactose and 0.3 part of Silicone Oil KF-96 (manufactured by Shinetsu Kagaku Kogyo, viscosity: 100 cps at 25°C) to give granules having a diameter of 1000-297 μm.

Preparation Example 10

The same procedure as in Preparation Example 1 was repeated with 20 parts of the compound (128), 9 parts of REAX 85A, 1 part of REAX 88B, 5 parts of GEROPON SC-211, 30 parts of sodium carbonate, 30 parts of maleic acid, 4.5 parts of lactose and 0.5 part of Silicone Oil KF-96 (manufactured by Shinetsu Kagaku Kogyo, viscosity: 100 cps at 25°C) to give granules having a diameter of 1000-297 μm.

Preparation Example 11

The same procedure as in Preparation Example 1 was repeated with 20 parts of the compound (128), 9 parts of REAX 85A, 1 part of REAX 88B, 5 parts of GEROPON SC-211, 30 parts of sodium carbonate, 30 parts of maleic acid, 4 parts of lactose and 1 part of Silicone Oil KF-96 (manufactured by Shinetsu Kagaku Kogyo, viscosity: 100 cps at 25°C) to give granules having a diameter of 1000-297 μm.

Preparation Example 12

The same procedure as in Preparation Example 1 was repeated with 20 parts of the compound (128), 9 parts of REAX 85A, 1 part of REAX 88B, 5 parts of GEROPON SC-211, 30 parts of sodium carbonate, 30 parts of maleic acid, 2 parts of lactose and 3 part of Silicone Oil KF-96 (manufactured by Shinetsu Kagaku Kogyo, viscosity: 100 cps at 25°C) to give granules having a diameter of 1000-297 μm.

Preparation Example 13

The same procedure as in Preparation Example 1 was repeated with 5 parts of the compound (125), 10 parts of phenylxylylethane, 13 part of Carplex CS-7 (a calcined product of silica produced by the wet process, manufactured by Shionogi & Co., Ltd.), 5 parts of boron oxide, 10 parts of a spray-dried product of sodium dodecylbenzenesulfonate: Carplex CS-7 = 1 : 1, 3 parts of DEMOL SN-B (formaldehyde condensate of sodium naphthalene sulfonate, manufactured by Kao Soap Co., Ltd.), 15 parts of sodium carbonate, 15 parts of fumaric acid, 21 parts of lactose and 3 parts of Silicone Oil KF-96 (manufactured by Shinetsu Kagaku Kogyo, viscosity: 500 cps at 25°C) to give granules having a diameter of 1000-297 μm.

Preparation Example 14

The same procedure as in Preparation Example 1 was repeated with 5 parts of the compound (125), 10 parts of phenylxylylethane, 13 parts of Carplex CS-7, 10 parts of boron oxide, 10 parts of a spray-dried product of sodium dodecylbenzenesulfonate : Carplex CS-7 = 1 : 1, 3 parts of DEMOL SN-B 15 parts of sodium carbonate, 15 parts of maleic acid, 16 parts of lactose and 3 parts of Silicone Oil KF-96 (manufactured by Shinetsu Kagaku Kogyo, viscosity: 1000 cps at 25°C) to give granules having a diameter of 1680-500 μm.

Preparation Example 15

The same procedure as in Preparation Example 1 was repeated with 9 parts of the compound (128), 10.5 parts of the compound (123), 4.5 parts of REAX 85A, 0.5 part of REAX 88B, 5 parts of GEROPON SC-211, 7 parts of Carplex CS-7, 10 parts of metaboric acid, 20 parts of sodium carbonate, 20 parts of boric acid, 11 parts of lactose and 2.5 parts of Silicone Oil KF-96 (manufactured by Shinetsu Kagaku Kogyo, viscosity: 1000 cps at 25°C) to give granules having a diameter of 1680-710 μm.

Preparation Example 16

The same procedure as in Preparation Example 1 was repeated with 0.2 part of the compound (126), 15 parts of MOWET D425 (formaldhyde concentrate of sodium naphthalene sulfonate, manufactured by DESOTO Co.), 5 parts of MOWET EFW (dispersing agent, manufactured by DESOTO Co.), 35 parts of sodium carbonate, 35 parts of citric acid, 6.8 parts of lactose and 3 parts of Silicone Oil KF-96 (manufactured by Shinetsu Kagaku Kogyo, viscosity: 500 cps at 25°C) to give granules having a diameter of 2000 - 1000 μm.

Comparative Example 1

The same procedure as in Preparation Example 1 was repeated with 20 parts of the compound (128), 9 parts of REAX 85A, 1 part of REAX 88B, 5 parts of GEROPON SC-211, 30 parts of sodium carbonate, 30 parts of maleic acid and 5 parts of lactose to give granules having a particle diameter of 1000-297 μm.

Comparative Example 2

4 parts of the compound (128), 4 parts of Sorpol 5060, 30 parts of bentonite and 62 parts of kaolin clay were mixed well in a juice mixer and then pulverized in a centrifugal pulverizer. Then, 15 parts of water was added to the mixture, and the resulting mixture was kneaded with a mortar and a pestle, granulated using an extrusion machine having perforated die plate with holes of 0.9 mm and dried at 60°C for 10 minutes to give particles having a particle diameter of 1680 - 297 μm.

Text Examples are described below.

Test Example 1

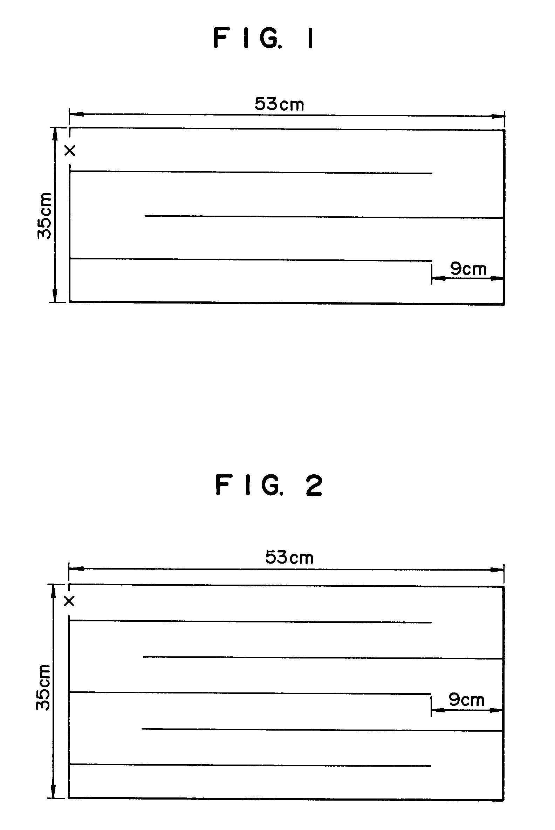

Three partition plates were arranged in an aluminium vat having a length of 35 cm and a width of 53 cm as shown in Fig. 1, and 7 liters of deionized water was charged in it. Next, the compositions obtained in Preparation Examples 1, 3, 4 and 5 were charged respectively to ensure that the amount of the preparation was 1000 g/10 are, and the distances of the movement of the compositions were observed visually.

After 24 hours from the charge of the compositions, 25 ml of the liquid at the positions of the distance of 0 cm, 87 cm or 122 cm and at the depth of about 0.5 cm from the bottom was sampled with a transfer pipet, and water was evaporated. The residual sample was analyzed by a gas chromatograph (detector: ECD) to measure the amount of the effective ingredient and to calculate its concentration in water.

The results are shown in Table 1.

## Table 1

| Test Composition | Concentration in water (ppm) | | |
| --- | --- | --- | --- |
| | 0 cm | 87 cm | 122 cm |
| Preparation Example 1 | 2.16 | 1.30 | 1.18 |
| Preparation Example 3 | 2.10 | 1.66 | 0.94 |
| Preparation Example 4 | 1.44 | 1.56 | 1.17 |
| Preparation Example 5 | 1.71 | 1.28 | 1.06 |

Test Example 2

Five partition plates were arranged in an aluminium vat having a length of 35 cm and a width of 53 cm as shown in Fig. 2, and 7 liters of deionized water was charged in it. Next, the compositions obtained in Preparation Examples 8, 9, 11 and 12 and the compositions obtained in Comparative Examples 1 and 2 were charged respectively to ensure that the amount of the preparation was 100 g/10 are, and the distances of the movement of the compositions were observed visually. After 24 hours from the charge of the compositions, 25 ml of the liquid at the positions of the distance of 0 cm, 113 cm, 229 cm or 287 cm and at the depth of about 0.5 cm from the bottom was sampled with a transfer pipet, and water was evaporated. The residual sample was analyzed by a gas chromatograph (detector: ECD) to measure the amount of the effective ingredient and to calculate its concentration in water.

The results are shown in Table 2.

## Table 2

| Test Composition | Concentration in water (ppm) | | | |
|---|---|---|---|---|
| | 0 cm | 113 cm | 229 cm | 287 cm |
| Preparation Example 8 | 2.21 | 2.33 | 1.41 | 0.63 |
| Preparation Example 9 | 2.22 | 2.32 | 1.17 | 0.49 |
| Preparation Example 11 | 2.65 | 2.46 | 1.02 | 0.47 |
| Preparation Example 12 | 2.13 | 1.97 | 0.97 | 0.54 |
| Comparative Example 1 | 2.76 | 2.46 | 0.49 | 0.10 |
| Comparative Example 2 | 23.6 | 0.41 | 0.01 | 0.00 |

As is obvious from the results listed in Tables 1 and 2, the compositions of the present invention are excellent in diffusing ability as compared with the preparation which has not been subjected to treatment with a water repellent and the conventional preparation shown in Comparative Examples.

In the accompanying drawing:

Figs. 1 and 2 are plan views of aluminium vats used in Test Examples 1 and 2, respectively, wherein three or five partitions are provided so that they are parallel to the longer side walls of the vat end the gap between the partitions and the shorter side walls is 9 cm. The symbol X indicates the position at which the test composition is charged.

Accordingly, a more general aspect of the present invention is the provision of an effervescent composition comprising a surface active agent, a carbonate, a solid acid and a water repellent.

## Claims

1. A pesticidal composition comprising (a) a pesticidal active ingredient, (b) a surface active agent, (c) a carbonate, (d) a solid acid and (e) a silicone oil-type water repellent and/or a fluorine-type water repellent, wherein at least one of the carbonate and the solid acid is water-soluble, the total content of the carbonate and the solid acid is in a proportion of 5 - 90% to the total weight, the weight ratio of the carbonate to the solid acid is in the range of 1 : 10 - 10 : 1, and the content of the silicone oil-type water, repellent and/or the fluorine-type water repellent is in a proportion of 0.01 - 10% to the total weight.

2. A composition according to claim 1, wherein(a) is in a proportion of 0.01 - 80% by weight and (b) is in a proportion of 0.1 - 70% by weight to the total weight.

3. A composition according to claim 1, wherein (a) is in a proportion of 0.1 - 50% by weight and (b) is in a proportion of 1 - 40% by weight to the total weight.

4. A composition according to any preceding claim wherein (e) is in a proportion of 0.1 to 5% by weight to the total weight.

5. A composition according to any preceding claim wherein (e) is a silicone oil-type water repellent and is selected from a silicone oil, a methylstyrene modified silicone oil, an olefin modified silicone oil, a polyether modified silicone oil, an alcohol modified silicone oil, a fluorine modified silicone oil, a mercapto-modified silicone oil, an epoxy-modified silicone oil and a higher fatty acid modified silicone oil.

6. A composition according to claim 5 wherein (e) is a silicone oil having a viscosity in the range of 1-3000 cps at 25°C.

7. A composition according to any one of claims 1 to 4 wherein (e) is a fluorine-type water repellent and is selected from a copolymer of perfluoroalkyl acrylic acidmethyl methacrylate, a copolymer of alkyl methacrylateperfluoroalkylmethacrylate, a fluoroalkylcarboxylic acid and a perfluoroalkylcarboxylic acid.

EP 0 488 660 A1

# F I G. 1

53cm

35cm

9cm

# F I G. 2

53cm

35cm

9cm

14

| European Patent Office | EUROPEAN SEARCH REPORT | Application Number |
|---|---|---|
| | | EP   91 31 0900 |

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| A | WO-A-9 000 007 (E. I. DU PONT DE NEMOURS AND COMPANY) --- | | A01N25/12 A01N25/14 A01N25/34 |
| A | DE-A-3 017 639 (NORDDEUTSCHER AFFINERIE) ----- | | |

**TECHNICAL FIELDS SEARCHED (Int. Cl.5 )**

A01N

The present search report has been drawn up for all claims

| Place of search | Date of completion of the search | Examiner |
|---|---|---|
| THE HAGUE | 09 MARCH 1992 | DONOVAN T.M. |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
........................................................................
& : member of the same patent family, corresponding
document

EPO FORM 1503 03.82 (P0401)